# EUROPEAN PATENT APPLICATION

(11) **EP 4 154 715 A1**
(43) Date of publication of application: **29.03.2023**
(21) Application number: 21198757.3
(22) Date of filing: 24.09.2021
(51) Int. Cl.: A01N 43/42, A01N 43/50, A01N 25/04, A01N 25/30, A01P 13/02

(54) **AGROCHEMICAL COMPOSITION COMPRISING A COMBINATION OF HERBICIDE ACTIVE INGREDIENTS**

(71) Applicant: Adama Agan Ltd., 7710001 Ashdod (IL)
(72) Inventor: MOCATTA, David, 7044651 Gedera (IL); BABUSHKIN, Victoria, 7745683 Ashdod (IL); SILBERT, Gilad, 7917500 Kibutz Dorot (IL)
(74) Representative: Modiano, Gabriella Diana

(57) **Abstract**

A suspension concentrate composition for agricultural applications, a process for preparation thereof and methods for controlling weeds, pests and/or diseases in plants. The suspension concentrate agrochemical composition contains the combination of at least one active ingredient dissolved in water and another active ingredient which is dispersed in the aqueous medium. The suspension concentrate agrochemical composition also contains a polyanionic block copolymer.

## Description

### FIELD OF THE INVENTION

The present invention belongs to the field of agrochemistry. It is directed to a suspension concentrate composition for agricultural applications, to a process for preparation thereof and to methods for controlling weeds, pests and diseases in plants.

### BACKGROUND

The prior art discloses different types of formulations in the agrochemical field and one of them are suspension concentrate formulations. A suspension concentrate is a suspension of at least one insoluble active ingredient in a solvent, which may contain dissolved other active ingredients, intended for dilution with water before use. Suspension concentrates contain solid particles of the insoluble active ingredient suspended in the solvent due to anionic and/or nonionic dispersants. Dispersants prevent particle agglomeration, what reduces the sedimentation rate. In consequence, dispersants allow to maintain the insoluble active ingredient suspended in the solvent more time.

On the other hand, there is an interest in the field of agrochemistry of stable formulations containing combinations of herbicide active ingredients with different modes of action that could control more effectively weeds, pests and/or diseases. One of the possible combinations of herbicide active ingredients with different modes of action is the combination of inhibitors of ALS (acetolactate synthase) enzyme and synthetic auxins.

### SUMMARY OF THE INVENTION

A first aspect is a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water.

A second aspect of the invention is directed to a tank mix comprising an adjuvant and a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water.

A third aspect of the invention is a method for the control of weeds, pests and/or diseases comprising contacting an effective amount of a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water; or contacting an effective amount of the tank mix comprising an adjuvant and the hereinabove defined suspension concentrate agrochemical composition, with at least one of a locus where the weed, pest and/or disease is to be controlled, a plant, an area adjacent to a plant, soil adapted to support growth of a plant, a root of a plant, foliage of a plant, and/or a seed adapted to produce a plant.

A fourth aspect of the invention is a process for the preparation of a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water; which comprises mixing the at least one water soluble salt of an imidazolinone herbicide with water, the polyanionic block copolymer, and the at least one synthetic auxin herbicide selected from the group consisting of pyridine carboxylic acids or quinolinecarboxylic acids.

### FIGURES

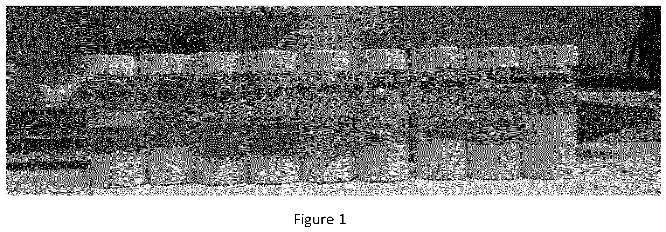

Figure 1 shows the pictures for the stability tests of compositions containing different dispersants according to Example 2.

### DETAILED DESCRIPTION OF THE INVENTION

### Definitions

Embodiments of the present invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. While a number of embodiments and features are described herein, it is to be understood that the various features of the invention and aspects of embodiments, even if described separately, may be combined unless mutually exclusive or contrary to the specific description. All references cited herein are incorporated by reference as if each had been individually incorporated.

As used herein, the transitional term "comprising" or "that comprises", which is synonymous with "including," or "containing," is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the essential or basic and novel characteristics of the composition or method under consideration.

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the term "stable" when used in connection with physical stabilization of the suspension concentrate agrochemical composition means that no phase separation leading to a clear or translucent liquid phase at the top of the composition is observed with the naked eye after storage of the suspension concentrate agrochemical composition for 24 hours at room temperature.

As used herein, the term "effective amount" when used in connection with an active ingredient or the suspension concentrate agrochemical composition containing the active ingredient or the tank mix containing the active ingredient, refers to an amount of the active ingredient that, when ingested, contacted with or sensed, is sufficient to achieve a good level of control of a weed, pest and/or disease.

An "active ingredient" is a substance capable of controlling undesired plants (weeds), plant pests or plant diseases, and does not cause significant damage to the treated crop plants. The term "active ingredient" comprises, but is not limited to insecticides, nematicides, herbicides, fungicides, algicides, animal repellents or acaricides. Active ingredients are not limited to pesticides, and also include for example hormones, bio-stimulants, and plant growth regulators.

As used herein the term "plant" or "crop" or "crop plants" includes reference to whole plants, plant organs (e.g. leaves, stems, twigs, roots, trunks, limbs, shoots, fruits etc.), plant cells, or plant seeds, which have industrial interest, including grasslands and pastures, such as for example plants destined to human consumption, animal consumption or other industrial uses. This term also encompasses crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil. As used herein, the term "crop" includes plants which have been modified by breeding, mutagenesis or genetic engineering. Genetically modified plants are plants in which their genetic material has been modified by the use of recombinant DNA techniques. Typically, one or more genes have been integrated into the genetic material of such a plant in order to improve certain properties of the plant.

As used herein, the term "locus" includes a habitat, breeding ground, plant, propagation material, soil, area, material or environment in which a weed, pest and/or disease is growing or may grow.

As used herein, the terms "control" or "controlling" or "combatting" refers to preventing disease, pests or the growth of weeds, protecting plants from diseases or pests, delaying the onset of disease, and killing, or to reducing the deleterious effects of the disease, or pests, or to killing or to reducing growth of weeds.

The term "dispersant" in the present invention refers to a substance for promoting the formation and/or stabilization of an even distribution of particles throughout the suspension concentrate agrochemical composition.

The suspension concentrate agrochemical composition (or the tank mix thereof) may additionally comprise agriculturally acceptable inert additives. These additives are defined herein as any substance that itself is not an active ingredient but is added to the composition to improve its properties. Some substances can be used as agriculturally acceptable inert additives in the suspension concentrate agrochemical composition of the invention or mixed as tank additives with the suspension concentrate agrochemical composition of the invention prior to application in the field.

Non-limiting examples of agriculturally acceptable inert additives and of tank adjuvants are chelating agents, thickeners, anti-foam agents, pH buffers, antifreeze agents, surfactants, emulsifiers, wetting agents or humectants, suspending agents, stabilizers, plant penetrants (or translocators), anti-oxidation agents, preservative agents, drift retardants, inverting agents, soil penetrants, UV absorbers, binders, stickers, fertilizers, pigments, colorants or solvents.

For the purposes of the present invention it is understood that a "suspension concentrate" is a suspension of at least one active ingredient in water, which may contain dissolved other active ingredients. Suspension concentrates contain solid particles of the insoluble active ingredient suspended in the solvent due to anionic and/or nonionic dispersants. A suspension concentrate may be applied directly in the field or it may be diluted with water before use.

The term "hydrophobic" refers to having affinity to organic solvents, and which therefore do not dissolve in water or do so in negligible amounts. For example, hydrophobic compounds have a solubility of less than 1 g/L in water at 20°C.

The term "hydrophilic" refers to species having affinity to water, and which therefore do not dissolve in organic solvents or do so in negligible amounts. The term "water soluble" is synonym of "hydrophilic", and water soluble compounds have a solubility of more than 1 g/L in water at 20°C.

As used herein, the phrase "block copolymer" means a polymer comprising at least two different polymers combined by a covalent bond. Each of the blocks is usually a homopolymer but can also be a copolymer with a specific distinct physical/chemical or functional characteristic (e.g., having one block that is easily soluble in water, with the other block being primarily insoluble in water). Therefore, the polyanionic block copolymer comprises at least one "hydrophilic moiety" and at least one "hydrophobic moiety". Each of these moieties can be homopolymers or block copolymers themselves.

"Alkyl" means in the present document a straight or branched hydrocarbon chain radical consisting of carbon and hydrogen atoms, containing no unsaturation, having the number of carbon atoms indicated in each case, for example 1-16 carbon atoms (C₁-C₁₆-), which is attached to the rest of the molecule through a single bond. Exemplary alkyl groups can be methyl, ethyl, n-propyl, i-propyl, n-butyl, t-butyl, or n-pentyl.

"Alkylammonium" means in the present document the cation formed by the protonation of a primary, secondary or tertiary alkyl amine, where the alkyl group is optionally substituted with a hydroxyl group. Exemplary alkylammonium compounds include methylammonium, dimethylammonium, trimethylammonium, isopropylammonium or triisopropanolammonium.

The term "a" or "an" as used herein includes the singular and the plural, unless specifically stated otherwise. Therefore, the terms "a," "an" or "at least one" can be used interchangeably in this application.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges. Similarly, the ranges and amounts for each element of the technology described herein can be used together with ranges or amounts for any of the other elements.

### Suspension concentrate

The present disclosure relates to a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water.

This suspension concentrate agrochemical composition provides an alternative to the existing combinations of active ingredients with different herbicide modes of action, and particularly, it provides a stable composition, i.e. no phase separation after storage for 24 hours, containing at least one inhibitor of ALS enzyme and at least one synthetic auxin.

The cation of the at least one water soluble salt of the imidazolinone herbicide at the suspension concentrate agrochemical composition may be selected from the group consisting of ammonium, C₁-C₂₄ alkylammonium, alkaline or alkaline earth metals. The cation of the at least one water soluble salt of the imidazolinone herbicide at the suspension concentrate agrochemical composition may be selected from ammonium, isopropylammonium, triisopropanolammonium, methylammonium, dimethylammonium, trimethylammonium or alkaline metals.

The imidazolinone herbicide at the suspension concentrate agrochemical composition may be selected from the group consisting of imazapyr, imazapic, imazethapyr, imazamox or imazaquin. The imidazolinone herbicide at the suspension concentrate agrochemical composition may be imazamox.

The at least one water soluble salt of the imidazolinone herbicide at the suspension concentrate agrochemical composition may be selected from the group consisting of imazapyr isopropylamine salt, imazapyr methylammonium, imazapyr potassium, imazapic ammonium, imazapic trimethylammonium, imazapic isopropylammonium, imazethapyr ammonium, imazethapyr trimethylammonium, imazethapyr sodium, imazamox ammonium, imazamox triisopropanolammonium, imazamox dimethylammonium, imazaquin ammonium or imazaquin sodium. The at least one water soluble salt of the imidazolinone herbicide at the suspension concentrate agrochemical composition may be selected from the group consisting of imazapyr isopropylamine salt, imazapic ammonium, imazethapyr ammonium, imazamox ammonium, imazaquin ammonium or imazaquin sodium. The at least one water soluble salt of the imidazolinone herbicide at the suspension concentrate agrochemical composition may be selected from the group consisting of imazapic ammonium, imazethapyr ammonium, imazamox ammonium or imazaquin ammonium. The at least one water soluble salt of the imidazolinone herbicide at the suspension concentrate agrochemical composition may be imazamox ammonium.

The at least one pyridine carboxylic acid or quinolinecarboxylic acid synthetic auxin herbicide at the suspension concentrate agrochemical composition may be selected from the group consisting of clopyralid, aminopyralid, fluroxypyr, triclopyr, picloram, quinclorac or quinmerac. The at least one pyridine carboxylic acid or quinolinecarboxylic acid synthetic auxin herbicide at the suspension concentrate agrochemical composition may be quinclorac or quinmerac. The at least one pyridine carboxylic acid or quinolinecarboxylic acid synthetic auxin herbicide at the suspension concentrate agrochemical composition may be quinclorac.

The imidazolinone herbicide at the suspension concentrate agrochemical composition may be selected from the group consisting of imazapyr, imazapic, imazethapyr, imazamox or imazaquin and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The imidazolinone herbicide at the suspension concentrate agrochemical composition may be imazamox and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The imidazolinone herbicide at the suspension concentrate agrochemical composition may be imazamox and the at least one pyridine carboxylic acid or quinolinecarboxylic acid synthetic auxin herbicide may be quinclorac or quinmerac. The imidazolinone herbicide at the suspension concentrate agrochemical composition may be imazamox and the at least one pyridine carboxylic acid or quinolinecarboxylic acid synthetic auxin herbicide may be quinclorac.

The at least one water soluble salt of the imidazolinone herbicide at the suspension concentrate agrochemical composition may be selected from the group consisting of imazapyr isopropylamine salt, imazapyr methylammonium, imazapyr potassium, imazapic ammonium, imazapic trimethylammonium, imazapic isopropylammonium, imazethapyr ammonium, imazethapyr trimethylammonium, imazethapyr sodium, imazamox ammonium, imazamox triisopropanolammonium, imazamox dimethylammonium, imazaquin ammonium or imazaquin sodium and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The at least one water soluble salt of the imidazolinone herbicide at the suspension concentrate agrochemical composition may be selected from the group consisting of imazapyr isopropylamine salt, imazapic ammonium, imazethapyr ammonium, imazamox ammonium, imazaquin ammonium or imazaquin sodium and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The at least one water soluble salt of the imidazolinone herbicide at the suspension concentrate agrochemical composition may be selected from the group consisting of imazapic ammonium, imazethapyr ammonium, imazamox ammonium or imazaquin ammonium and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The at least one water soluble salt of the imidazolinone herbicide at the suspension concentrate agrochemical composition may be imazamox ammonium and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The at least one water soluble salt of the imidazolinone herbicide at the suspension concentrate agrochemical composition may be imazamox ammonium and the at least one pyridine carboxylic acid or quinolinecarboxylic acid synthetic auxin herbicide may be quinclorac or quinmerac. The at least one water soluble salt of the imidazolinone herbicide at the suspension concentrate agrochemical composition may be imazamox ammonium and the at least one pyridine carboxylic acid or quinolinecarboxylic acid synthetic auxin herbicide may be quinclorac.

The concentration of the at least one water soluble salt of the imidazolinone herbicide at the suspension concentrate agrochemical composition may be between 1% and 15%, between 1.5% and 10%, or between 2% and 6% by total weight of the composition.

The concentration of the at least one water soluble salt of the imidazolinone herbicide at the suspension concentrate agrochemical composition may be between 1% and 15%, between 1.5% and 10%, or between 2% and 6% by total weight of the composition and the cation of the at least one water soluble salt of the imidazolinone herbicide may be selected from the group consisting of ammonium, C₁-C₂₄ alkylammonium, alkaline or alkaline earth metals. The concentration of the at least one water soluble salt of the imidazolinone herbicide at the suspension concentrate agrochemical composition may be between 1% and 15%, between 1.5% and 10%, or between 2% and 6% by total weight of the composition and the cation of the at least one water soluble salt of the imidazolinone herbicide may be selected from ammonium, isopropylammonium, triisopropanolammonium, methylammonium, dimethylammonium, trimethylammonium or alkaline metals.

The concentration of the at least one water soluble salt of the imidazolinone herbicide at the suspension concentrate agrochemical composition may be between 1% and 15%, between 1.5% and 10%, or between 2% and 6% by total weight of the composition, and the imidazolinone herbicide may be selected from the group consisting of imazapyr, imazapic, imazethapyr, imazamox or imazaquin. The concentration of the at least one water soluble salt of the imidazolinone herbicide at the suspension concentrate agrochemical composition may be between 1% and 15%, between 1.5% and 10%, or between 2% and 6% by total weight of the composition, and the imidazolinone herbicide may be imazamox.

The concentration of the at least one water soluble salt of the imidazolinone herbicide at the suspension concentrate agrochemical composition may be between 1% and 15%, between 1.5% and 10%, or between 2% and 6% by total weight of the composition and the at least one water soluble salt of the imidazolinone herbicide at the suspension concentrate agrochemical composition may be selected from the group consisting of imazapyr isopropylamine salt, imazapyr methylammonium, imazapyr potassium, imazapic ammonium, imazapic trimethylammonium, imazapic isopropylammonium, imazethapyr ammonium, imazethapyr trimethylammonium, imazethapyr sodium, imazamox ammonium, imazamox triisopropanolammonium, imazamox dimethylammonium, imazaquin ammonium or imazaquin sodium. The concentration of the at least one water soluble salt of the imidazolinone herbicide at the suspension concentrate agrochemical composition may be between 1% and 15%, between 1.5% and 10%, or between 2% and 6% by total weight of the composition and the at least one water soluble salt of the imidazolinone herbicide may be selected from the group consisting of imazapyr isopropylamine salt, imazapic ammonium, imazethapyr ammonium, imazamox ammonium, imazaquin ammonium or imazaquin sodium. The concentration of the at least one water soluble salt of the imidazolinone herbicide at the suspension concentrate agrochemical composition may be between 1% and 15%, between 1.5% and 10%, or between 2% and 6% by total weight of the composition and the at least one water soluble salt of the imidazolinone herbicide may be selected from the group consisting of imazapic ammonium, imazethapyr ammonium, imazamox ammonium or imazaquin ammonium. The concentration of the at least one water soluble salt of the imidazolinone herbicide at the suspension concentrate agrochemical composition may be between 1% and 15%, between 1.5% and 10%, or between 2% and 6% by total weight of the composition and the at least one water soluble salt of the imidazolinone herbicide may be imazamox ammonium.

The concentration of at least one synthetic auxin herbicide selected from the group consisting of pyridine carboxylic acids or quinolinecarboxylic acids at the suspension concentrate agrochemical composition may be between 10% and 80%, between 15% and 60%, or between 20% and 40% by total weight of the composition.

The concentration of at least one synthetic auxin herbicide selected from the group consisting of pyridine carboxylic acids or quinolinecarboxylic acids at the suspension concentrate agrochemical composition may be between 10% and 80%, between 15% and 60%, or between 20% and 40% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The concentration of at least one synthetic auxin herbicide selected from the group consisting of pyridine carboxylic acids or quinolinecarboxylic acids at the suspension concentrate agrochemical composition may be between 10% and 80%, between 15% and 60%, or between 20% and 40% by total weight of the composition and the at least one pyridine carboxylic acid or quinolinecarboxylic acid synthetic auxin herbicide may be quinclorac or quinmerac. The concentration of at least one synthetic auxin herbicide selected from the group consisting of pyridine carboxylic acids or quinolinecarboxylic acids at the suspension concentrate agrochemical composition may be between 10% and 80%, between 15% and 60%, or between 20% and 40% by total weight of the composition and the at least one pyridine carboxylic acid or quinolinecarboxylic acid synthetic auxin herbicide may be quinclorac.

The concentration of the at least one water soluble salt of the imidazolinone herbicide at the suspension concentrate agrochemical composition may be between 1% and 15% by total weight of the composition, and the concentration of at least one synthetic auxin herbicide selected from the group consisting of pyridine carboxylic acids or quinolinecarboxylic acids may be between 10% and 80% by total weight of the composition. The concentration of the at least one water soluble salt of the imidazolinone herbicide at the suspension concentrate agrochemical composition may be between 1.5% and 10% by total weight of the composition, and the concentration of at least one synthetic auxin herbicide selected from the group consisting of pyridine carboxylic acids or quinolinecarboxylic acids may be between 15% and 60% by total weight of the composition. The concentration of the at least one water soluble salt of the imidazolinone herbicide at the suspension concentrate agrochemical composition may be between 2% and 6% by total weight of the composition, and the concentration of at least one synthetic auxin herbicide selected from the group consisting of pyridine carboxylic acids or quinolinecarboxylic acids may be between 20% and 40% by total weight of the composition.

The concentration of the at least one water soluble salt of the imidazolinone herbicide at the suspension concentrate agrochemical composition may be between 1% and 15% by total weight of the composition, the cation of the at least one water soluble salt of the imidazolinone herbicide may be selected from the group consisting of ammonium, C₁-C₂₄ alkylammonium, alkaline or alkaline earth metals, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The concentration of the at least one water soluble salt of the imidazolinone herbicide at the suspension concentrate agrochemical composition may be between 1.5% and 10% by total weight of the composition, the cation of the at least one water soluble salt of the imidazolinone herbicide may be selected from ammonium, isopropylammonium, triisopropanolammonium, methylammonium, dimethylammonium, trimethylammonium or alkaline metals, the concentration of at least one synthetic auxin herbicide selected from the group consisting of pyridine carboxylic acids or quinolinecarboxylic acids may be between 15% and 60% by total weight of the composition and the at least one pyridine carboxylic acid or quinolinecarboxylic acid synthetic auxin herbicide may be quinclorac or quinmerac. The concentration of the at least one water soluble salt of the imidazolinone herbicide at the suspension concentrate agrochemical composition may be between 2% and 6% by total weight of the composition, the cation of the at least one water soluble salt of the imidazolinone herbicide may be selected from ammonium or alkaline metals, the concentration of at least one synthetic auxin herbicide selected from the group consisting of pyridine carboxylic acids or quinolinecarboxylic acids may be between 20% and 40% by total weight of the composition and the at least one pyridine carboxylic acid or quinolinecarboxylic acid synthetic auxin herbicide may be quinclorac.

The concentration of the at least one water soluble salt of the imidazolinone herbicide at the suspension concentrate agrochemical composition may be between 1% and 15% by total weight of the composition, the imidazolinone herbicide may be selected from the group consisting of imazapyr, imazapic, imazethapyr, imazamox or imazaquin, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The concentration of the at least one water soluble salt of the imidazolinone herbicide at the suspension concentrate agrochemical composition may be between 1.5% and 10% by total weight of the composition, the imidazolinone herbicide may be imazamox, the concentration of at least one synthetic auxin herbicide selected from the group consisting of pyridine carboxylic acids or quinolinecarboxylic acids may be between 15% and 60% by total weight of the composition and the at least one pyridine carboxylic acid or quinolinecarboxylic acid synthetic auxin herbicide may be quinclorac or quinmerac. The concentration of the at least one water soluble salt of the imidazolinone herbicide at the suspension concentrate agrochemical composition may be between 2% and 6% by total weight of the composition, the imidazolinone herbicide may be imazamox, the concentration of at least one synthetic auxin herbicide selected from the group consisting of pyridine carboxylic acids or quinolinecarboxylic acids may be between 20% and 40% by total weight of the composition and the at least one pyridine carboxylic acid or quinolinecarboxylic acid synthetic auxin herbicide may be quinclorac.

The concentration of the at least one water soluble salt of the imidazolinone herbicide at the suspension concentrate agrochemical composition may be between 1% and 15% by total weight of the composition, the at least one water soluble salt of the imidazolinone herbicide at the suspension concentrate agrochemical composition may be selected from the group consisting of imazapyr isopropylamine salt, imazapyr methylammonium, imazapyr potassium, imazapic ammonium, imazapic trimethylammonium, imazapic isopropylammonium, imazethapyr ammonium, imazethapyr trimethylammonium, imazethapyr sodium, imazamox ammonium, imazamox triisopropanolammonium, imazamox dimethylammonium, imazaquin ammonium or imazaquin sodium, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The concentration of the at least one water soluble salt of the imidazolinone herbicide at the suspension concentrate agrochemical composition may be between 1% and 15% by total weight of the composition, the at least one water soluble salt of the imidazolinone herbicide may be selected from the group consisting of imazapyr isopropylamine salt, imazapic ammonium, imazethapyr ammonium, imazamox ammonium, imazaquin ammonium or imazaquin sodium, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The concentration of the at least one water soluble salt of the imidazolinone herbicide at the suspension concentrate agrochemical composition may be between 1.5% and 10% by total weight of the composition, the at least one water soluble salt of the imidazolinone herbicide may be selected from the group consisting of imazapic ammonium, imazethapyr ammonium, imazamox ammonium or imazaquin ammonium, the concentration of at least one synthetic auxin herbicide selected from the group consisting of pyridine carboxylic acids or quinolinecarboxylic acids may be between 15% and 60% by total weight of the composition and the at least one pyridine carboxylic acid or quinolinecarboxylic acid synthetic auxin herbicide may be quinclorac or quinmerac. The concentration of the at least one water soluble salt of the imidazolinone herbicide at the suspension concentrate agrochemical composition may be between 2% and 6% by total weight of the composition, the at least one water soluble salt of the imidazolinone herbicide may be imazamox ammonium, the concentration of at least one synthetic auxin herbicide selected from the group consisting of pyridine carboxylic acids or quinolinecarboxylic acids may be between 20% and 40% by total weight of the composition and the at least one pyridine carboxylic acid or quinolinecarboxylic acid synthetic auxin herbicide may be quinclorac.

The ratio by weight of the at least one water soluble salt of an imidazolinone herbicide to the at least one synthetic auxin herbicide selected from the group consisting of pyridine carboxylic acids or quinolinecarboxylic acids may range from 1:3 to 1:30, from 1:5 to 1:20, or from 1:7 to 1:15 at the suspension concentrate agrochemical composition.

The ratio by weight of the at least one water soluble salt of an imidazolinone herbicide to the at least one synthetic auxin herbicide selected from the group consisting of pyridine carboxylic acids or quinolinecarboxylic acids may range from 1:3 to 1:30 at the suspension concentrate agrochemical composition, the concentration of the at least one water soluble salt of the imidazolinone herbicide may be between 1% and 15% by total weight of the composition, and the concentration of at least one synthetic auxin herbicide selected from the group consisting of pyridine carboxylic acids or quinolinecarboxylic acids may be between 10% and 80% by total weight of the composition. The ratio by weight of the at least one water soluble salt of an imidazolinone herbicide to the at least one synthetic auxin herbicide selected from the group consisting of pyridine carboxylic acids or quinolinecarboxylic acids may range from 1:5 to 1:20 at the suspension concentrate agrochemical composition, the concentration of the at least one water soluble salt of the imidazolinone herbicide may be between 1.5% and 10% by total weight of the composition, and the concentration of at least one synthetic auxin herbicide selected from the group consisting of pyridine carboxylic acids or quinolinecarboxylic acids may be between 15% and 60% by total weight of the composition. The ratio by weight of the at least one water soluble salt of an imidazolinone herbicide to the at least one synthetic auxin herbicide selected from the group consisting of pyridine carboxylic acids or quinolinecarboxylic acids may range from 1:7 to 1:15 at the suspension concentrate agrochemical composition, the concentration of the at least one water soluble salt of the imidazolinone herbicide may be between 2% and 6% by total weight of the composition, and the concentration of at least one synthetic auxin herbicide selected from the group consisting of pyridine carboxylic acids or quinolinecarboxylic acids may be between 20% and 40% by total weight of the composition.

The ratio by weight of the at least one water soluble salt of an imidazolinone herbicide to the at least one synthetic auxin herbicide selected from the group consisting of pyridine carboxylic acids or quinolinecarboxylic acids may range from 1:3 to 1:30 at the suspension concentrate agrochemical composition, the concentration of the at least one water soluble salt of the imidazolinone herbicide may be between 1% and 15% by total weight of the composition, the imidazolinone herbicide may be selected from the group consisting of imazapyr, imazapic, imazethapyr, imazamox or imazaquin, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The ratio by weight of the at least one water soluble salt of an imidazolinone herbicide to the at least one synthetic auxin herbicide selected from the group consisting of pyridine carboxylic acids or quinolinecarboxylic acids may range from 1:5 to 1:20 at the suspension concentrate agrochemical composition, the concentration of the at least one water soluble salt of the imidazolinone herbicide may be between 1.5% and 10% by total weight of the composition, the imidazolinone herbicide may be imazamox, the concentration of at least one synthetic auxin herbicide selected from the group consisting of pyridine carboxylic acids or quinolinecarboxylic acids may be between 15% and 60% by total weight of the composition and the at least one pyridine carboxylic acid or quinolinecarboxylic acid synthetic auxin herbicide may be quinclorac or quinmerac. The ratio by weight of the at least one water soluble salt of an imidazolinone herbicide to the at least one synthetic auxin herbicide selected from the group consisting of pyridine carboxylic acids or quinolinecarboxylic acids may range from 1:7 to 1:15 at the suspension concentrate agrochemical composition, the concentration of the at least one water soluble salt of the imidazolinone herbicide may be between 2% and 6% by total weight of the composition, the imidazolinone herbicide may be imazamox, the concentration of at least one synthetic auxin herbicide selected from the group consisting of pyridine carboxylic acids or quinolinecarboxylic acids may be between 20% and 40% by total weight of the composition and the at least one pyridine carboxylic acid or quinolinecarboxylic acid synthetic auxin herbicide may be quinclorac.

The ratio by weight of the at least one water soluble salt of an imidazolinone herbicide to the at least one synthetic auxin herbicide selected from the group consisting of pyridine carboxylic acids or quinolinecarboxylic acids may range from 1:3 to 1:30 at the suspension concentrate agrochemical composition, the concentration of the at least one water soluble salt of the imidazolinone herbicide may be between 1% and 15% by total weight of the composition, the at least one water soluble salt of the imidazolinone herbicide at the suspension concentrate agrochemical composition may be selected from the group consisting of imazapyr isopropylamine salt, imazapyr methylammonium, imazapyr potassium, imazapic ammonium, imazapic trimethylammonium, imazapic isopropylammonium, imazethapyr ammonium, imazethapyr trimethylammonium, imazethapyr sodium, imazamox ammonium, imazamox triisopropanolammonium, imazamox dimethylammonium, imazaquin ammonium or imazaquin sodium, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The ratio by weight of the at least one water soluble salt of an imidazolinone herbicide to the at least one synthetic auxin herbicide selected from the group consisting of pyridine carboxylic acids or quinolinecarboxylic acids may range from 1:3 to 1:30 at the suspension concentrate agrochemical composition, the concentration of the at least one water soluble salt of the imidazolinone herbicide may be between 1% and 15% by total weight of the composition, the at least one water soluble salt of the imidazolinone herbicide may be selected from the group consisting of imazapyr isopropylamine salt, imazapic ammonium, imazethapyr ammonium, imazamox ammonium, imazaquin ammonium or imazaquin sodium, the concentration of at least one synthetic auxin herbicide selected from the group consisting of pyridine carboxylic acids or quinolinecarboxylic acids may be between 10% and 80% by total weight of the composition and the at least one pyridine carboxylic acid or quinolinecarboxylic acid synthetic auxin herbicide may be selected from the group consisting of clopyralid, aminopyralid, fluroxypyr, triclopyr, picloram, quinclorac or quinmerac. The ratio by weight of the at least one water soluble salt of an imidazolinone herbicide to the at least one synthetic auxin herbicide selected from the group consisting of pyridine carboxylic acids or quinolinecarboxylic acids may range from 1:5 to 1:20 at the suspension concentrate agrochemical composition, the concentration of the at least one water soluble salt of the imidazolinone herbicide may be between 1.5% and 10% by total weight of the composition, the at least one water soluble salt of the imidazolinone herbicide may be selected from the group consisting of imazapic ammonium, imazethapyr ammonium, imazamox ammonium or imazaquin ammonium, the concentration of at least one synthetic auxin herbicide selected from the group consisting of pyridine carboxylic acids or quinolinecarboxylic acids may be between 15% and 60% by total weight of the composition and the at least one pyridine carboxylic acid or quinolinecarboxylic acid synthetic auxin herbicide may be quinclorac or quinmerac. The ratio by weight of the at least one water soluble salt of an imidazolinone herbicide to the at least one synthetic auxin herbicide selected from the group consisting of pyridine carboxylic acids or quinolinecarboxylic acids may range from 1:7 to 1:15 at the suspension concentrate agrochemical composition, the concentration of the at least one water soluble salt of the imidazolinone herbicide may be between 2% and 6% by total weight of the composition, the at least one water soluble salt of the imidazolinone herbicide may be imazamox ammonium, the concentration of at least one synthetic auxin herbicide selected from the group consisting of pyridine carboxylic acids or quinolinecarboxylic acids may be between 20% and 40% by total weight of the composition and the at least one pyridine carboxylic acid or quinolinecarboxylic acid synthetic auxin herbicide may be quinclorac.

The pH of the suspension concentrate agrochemical composition may range from 3.5 to 7, from 4 to 6.5, or from 4.5 to 6.0.

The distribution of the particle size for the suspension concentrate agrochemical composition may show a D(90) lower than 20 µm, lower than 15 µm or lower than 10 µm, where D(90) means that 90% of the particles show a diameter lower than the given values.

The viscosity of the suspension concentrate agrochemical composition may range from 30 to 5,000 centipoise (cps), from 50 to 4,000 cps, or from 100 to 3,200 cps, when it is measured with a Brookfield DV2T viscosimeter using spindle 63 at 12 rpm at room temperature.

The hydrophilic moiety of the polyanionic block copolymer in the suspension concentrate agrochemical composition may comprise at least 60% by weight, at least 70% by weight, at least 80% by weight or at least 90% by weight of charged monomers with respect to the hydrophilic moiety.

The molar ratio of the hydrophobic moiety to the hydrophilic moiety may range from 1:2 to 1:4, and the weight ratio of the hydrophobic moiety to the hydrophilic moiety may be lower than 0.6, lower than 0.5, lower than 0.4, or lower than 0.3 for the polyanionic block copolymer in the suspension concentrate agrochemical composition.

The hydrophilic moiety of the polyanionic block copolymer in the suspension concentrate agrochemical composition may comprise at least 60% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.6 for the polyanionic block. The hydrophilic moiety of the polyanionic block copolymer in the suspension concentrate agrochemical composition may comprise at least 70% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.5 for the polyanionic block copolymer. The hydrophilic moiety of the polyanionic block copolymer in the suspension concentrate agrochemical composition may comprise at least 80% by weight or at least 90% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.4 for the polyanionic block copolymer. The hydrophilic moiety of the polyanionic block copolymer in the suspension concentrate agrochemical composition may comprise at least 90% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.3 for the polyanionic block copolymer.

The percentage of charged monomers of the polyanionic block copolymer in the suspension concentrate agrochemical composition may be at least 35%, at least 45% or at least 55% by weight of the weight of the polyanionic block copolymer.

The percentage of charged monomers of the polyanionic block copolymer in the suspension concentrate agrochemical composition may be at least 35% by weight of the weight of the polyanionic block copolymer, and the hydrophilic moiety of the polyanionic block copolymer may comprise at least 60% by weight of charged monomers with respect to the hydrophilic moiety. The percentage of charged monomers of the polyanionic block copolymer in the suspension concentrate agrochemical composition may be at least 45% by weight of the weight of the polyanionic block copolymer, and the hydrophilic moiety of the polyanionic block copolymer may comprise at least 70% by weight of charged monomers with respect to the hydrophilic moiety. The percentage of charged monomers of the polyanionic block copolymer in the suspension concentrate agrochemical composition may be at least 55% by weight of the weight of the polyanionic block copolymer, and the hydrophilic moiety of the polyanionic block copolymer may comprise at least 80% by weight by weight of charged monomers with respect to the hydrophilic moiety.

The percentage of charged monomers of the polyanionic block copolymer in the suspension concentrate agrochemical composition may be at least 35% by weight of the weight of the polyanionic block copolymer and the molar ratio of the hydrophobic moiety to the hydrophilic moiety may range from 1:2 to 1:4, and the weight ratio of the hydrophobic moiety to the hydrophilic moiety may be lower than 0.6 for the polyanionic block copolymer. The percentage of charged monomers of the polyanionic block copolymer in the suspension concentrate agrochemical composition may be at least 45% by weight of the weight of the polyanionic block copolymer and the molar ratio of the hydrophobic moiety to the hydrophilic moiety may range from 1:2 to 1:4, and the weight ratio of the hydrophobic moiety to the hydrophilic moiety may be lower than 0.5 for the polyanionic block copolymer. The percentage of charged monomers of the polyanionic block copolymer in the suspension concentrate agrochemical composition may be at least 55% by weight of the weight of the polyanionic block copolymer and the molar ratio of the hydrophobic moiety to the hydrophilic moiety may range from 1:2 to 1:4, and the weight ratio of the hydrophobic moiety to the hydrophilic moiety may be lower than 0.4 for the polyanionic block copolymer.

The percentage of charged monomers of the polyanionic block copolymer in the suspension concentrate agrochemical composition may be at least 35% by weight of the weight of the polyanionic block copolymer, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.6 for the polyanionic block copolymer. The percentage of charged monomers of the polyanionic block copolymer in the suspension concentrate agrochemical composition may be at least 45% by weight of the weight of the polyanionic block copolymer, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.5 for the polyanionic block copolymer. The percentage of charged monomers of the polyanionic block copolymer in the suspension concentrate agrochemical composition may be at least 55% by weight of the weight of the polyanionic block copolymer, the hydrophilic moiety of the polyanionic block copolymer may comprise at least 80% by weight by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.4 for the polyanionic block copolymer.

The molecular weight of the polyanionic block copolymer in the suspension concentrate agrochemical composition may be between 8,000 and 50,000 g/mol, or between 8,000 and 31,000 g/mol, or between 10,000 and 25,000 g/mol. The polyanionic block copolymer in the suspension concentrate agrochemical composition may comprise up to 150 monomers, up to 85 monomers, or up to 63 monomers.

The molecular weight of the polyanionic block copolymer in the suspension concentrate agrochemical composition may be between 8,000 and 50,000 g/mol and the hydrophilic moiety of the polyanionic block copolymer may comprise at least 60% by weight of charged monomers with respect to the hydrophilic moiety. The molecular weight of the polyanionic block copolymer in the suspension concentrate agrochemical composition may be between 8,000 and 31,000 g/mol and the hydrophilic moiety of the polyanionic block copolymer may comprise at least 70% by weight of charged monomers with respect to the hydrophilic moiety. The molecular weight of the polyanionic block copolymer in the suspension concentrate agrochemical composition may be between 10,000 and 25,000 g/mol and the hydrophilic moiety of the polyanionic block copolymer may comprise at least 80% by weight of charged monomers with respect to the hydrophilic moiety.

The molecular weight of the polyanionic block copolymer in the suspension concentrate agrochemical composition may be between 8,000 and 50,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.6 for the polyanionic block copolymer. The molecular weight of the polyanionic block copolymer in the suspension concentrate agrochemical composition may be between 8,000 and 31,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.5 for the polyanionic block copolymer. The molecular weight of the polyanionic block copolymer in the suspension concentrate agrochemical composition may be between 10,000 and 25,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.4 for the polyanionic block copolymer.

The molecular weight of the polyanionic block copolymer in the suspension concentrate agrochemical composition may be between 8,000 and 50,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6 for the polyanionic block copolymer and the percentage of charged monomers of the polyanionic block copolymer may be at least 35% by weight of the weight of the polyanionic block copolymer. The molecular weight of the polyanionic block copolymer in the suspension concentrate agrochemical composition may be between 8,000 and 31,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5 for the polyanionic block copolymer and the percentage of charged monomers of the polyanionic block copolymer may be at least 45% by weight of the weight of the polyanionic block copolymer. The molecular weight of the polyanionic block copolymer in the suspension concentrate agrochemical composition may be between 10,000 and 25,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4 for the polyanionic block copolymer and the percentage of charged monomers of the polyanionic block copolymer may be at least 55% by weight of the weight of the polyanionic block copolymer.

The molecular weight of the hydrophilic moiety of the polyanionic block copolymer in the suspension concentrate agrochemical composition may be between 5,000 and 100,000 g/mol, between 6,000 and 50,000 g/mol, between 7,000 and 30,000 g/mol, or between 8,000 and 12,000 g/mol.

The molecular weight of the hydrophilic moiety of the polyanionic block copolymer in the suspension concentrate agrochemical composition may be between 5,000 and 100,000 g/mol and the hydrophilic moiety of the polyanionic block copolymer may comprise at least 60% by weight of charged monomers with respect to the hydrophilic moiety. The molecular weight of the hydrophilic moiety of the polyanionic block copolymer in the suspension concentrate agrochemical composition may be between 6,000 and 50,000 g/mol and the hydrophilic moiety of the polyanionic block copolymer may comprise at least 70% by weight of charged monomers with respect to the hydrophilic moiety. The molecular weight of the hydrophilic moiety of the polyanionic block copolymer in the suspension concentrate agrochemical composition may be between 7,000 and 30,000 g/mol and the hydrophilic moiety of the polyanionic block copolymer may comprise at least 80% by weight of charged monomers with respect to the hydrophilic moiety. The molecular weight of the hydrophilic moiety of the polyanionic block copolymer in the suspension concentrate agrochemical composition may be between 8,000 and 12,000 g/mol and the hydrophilic moiety of the polyanionic block copolymer may comprise at least 90% by weight of charged monomers with respect to the hydrophilic moiety.

The molecular weight of the hydrophilic moiety of the polyanionic block copolymer in the suspension concentrate agrochemical composition may be between 5,000 and 100,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.6 for the polyanionic block copolymer. The molecular weight of the hydrophilic moiety of the polyanionic block copolymer in the suspension concentrate agrochemical composition may be between 6,000 and 50,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.5 for the polyanionic block copolymer. The molecular weight of the hydrophilic moiety of the polyanionic block copolymer in the suspension concentrate agrochemical composition may be between 7,000 and 30,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.4 for the polyanionic block copolymer. The molecular weight of the hydrophilic moiety of the polyanionic block copolymer in the suspension concentrate agrochemical composition may be between 8,000 and 12,000 g/mol, the hydrophilic moiety of the polyanionic block copolymer may comprise at least 90% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.3 for the polyanionic block copolymer.

The molecular weight of the hydrophilic moiety of the polyanionic block copolymer in the suspension concentrate agrochemical composition may be between 5,000 and 100,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6 for the polyanionic block copolymer and the percentage of charged monomers of the polyanionic block copolymer may be at least 35% by weight of the weight of the polyanionic block copolymer. The molecular weight of the hydrophilic moiety of the polyanionic block copolymer in the suspension concentrate agrochemical composition may be between 6,000 and 50,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5 for the polyanionic block copolymer and the percentage of charged monomers of the polyanionic block copolymer may be at least 45% by weight of the weight of the polyanionic block copolymer. The molecular weight of the hydrophilic moiety of the polyanionic block copolymer in the suspension concentrate agrochemical composition may be between 7,000 and 30,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4 for the polyanionic block copolymer, and the percentage of charged monomers of the polyanionic block copolymer may be at least 55% by weight of the weight of the polyanionic block copolymer.

The molecular weight of the hydrophilic moiety of the polyanionic block copolymer in the suspension concentrate agrochemical composition may be between 5,000 and 100,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6 for the polyanionic block copolymer, the percentage of charged monomers of the polyanionic block copolymer may be at least 35% by weight of the weight of the polyanionic block copolymer and the molecular weight of the polyanionic block copolymer in the suspension concentrate agrochemical composition may be between 8,000 and 50,000 g/mol. The molecular weight of the hydrophilic moiety of the polyanionic block copolymer in the suspension concentrate agrochemical composition may be between 6,000 and 50,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5 for the polyanionic block copolymer, the percentage of charged monomers of the polyanionic block copolymer may be at least 45% by weight of the weight of the polyanionic block copolymer and the molecular weight of the polyanionic block copolymer in the suspension concentrate agrochemical composition may be between 8,000 and 31,000 g/mol. The molecular weight of the hydrophilic moiety of the polyanionic block copolymer in the suspension concentrate agrochemical composition may be between 7,000 and 30,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4 for the polyanionic block copolymer, the percentage of charged monomers of the polyanionic block copolymer may be at least 55% by weight of the weight of the polyanionic block copolymer and the molecular weight of the polyanionic block copolymer in the suspension concentrate agrochemical composition may be between 10,000 and 25,000 g/mol.

The molecular weight of the hydrophobic moiety of the polyanionic block copolymer in the suspension concentrate agrochemical composition may be between 500 and 5,000 g/mol, between 1,000 and 4,000 g/mol, or between 1,500 and 3,000 g/mol.

The molecular weight of the hydrophobic moiety of the polyanionic block copolymer in the suspension concentrate agrochemical composition may be between 500 and 5,000 g/mol, and the molecular weight of the hydrophilic moiety may be between 5,000 and 100,000 g/mol. The molecular weight of the hydrophobic moiety of the polyanionic block copolymer in the suspension concentrate agrochemical composition may be between 1,000 and 4,000 g/mol, and the molecular weight of the hydrophilic moiety may be between 6,000 and 50,000 g/mol. The molecular weight of the hydrophobic moiety of the polyanionic block copolymer in the suspension concentrate agrochemical composition may be between 1,500 and 3,000 g/mol, and the molecular weight of the hydrophilic moiety may be between 7,000 and 30,000 g/mol.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, and the percentage of charged monomers of the polyanionic block copolymer may be at least 35% by weight of the weight of the polyanionic block copolymer. The molecular weight of the hydrophobic moiety of the polyanionic block copolymer in the suspension concentrate agrochemical composition may be between 1,000 and 4,000 g/mol, the molecular weight of the hydrophilic moiety may be between 6,000 and 50,000 g/mol, and the percentage of charged monomers of the polyanionic block copolymer may be at least 45% by weight of the weight of the polyanionic block copolymer. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, and the percentage of charged monomers of the polyanionic block copolymer may be at least 55% by weight of the weight of the polyanionic block copolymer.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, and the molecular weight of the polyanionic block copolymer may be between 8,000 and 50,000 g/mol. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, and the molecular weight of the polyanionic block copolymer may be between 8,000 and 31,000 g/mol. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, and the molecular weight of the polyanionic block copolymer may be between 10,000 and 25,000 g/mol.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, the molecular weight of the polyanionic block copolymer may be between 8,000 and 50,000 g/mol, and the percentage of charged monomers of the polyanionic block copolymer may be at least 35% by weight of the weight of the polyanionic block copolymer. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, the molecular weight of the polyanionic block copolymer may be between 8,000 and 31,000 g/mol and the percentage of charged monomers of the polyanionic block copolymer may be at least 45% by weight of the weight of the polyanionic block copolymer. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, the molecular weight of the polyanionic block copolymer may be between 10,000 and 25,000 g/mol and the percentage of charged monomers of the polyanionic block copolymer may be at least 55% by weight of the weight of the polyanionic block copolymer.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, the molecular weight of the polyanionic block copolymer may be between 8,000 and 50,000 g/mol, the molar ratio of the hydrophobic moiety to the hydrophilic moiety may range from 1:2 to 1:4, and the weight ratio of the hydrophobic moiety to the hydrophilic moiety may be lower than 0.6. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, the molecular weight of the polyanionic block copolymer may be between 8,000 and 31,000 g/mol, the molar ratio of the hydrophobic moiety to the hydrophilic moiety may range from 1:2 to 1:4, and the weight ratio of the hydrophobic moiety to the hydrophilic moiety may be lower than 0.5. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, the molecular weight of the polyanionic block copolymer may be between 10,000 and 25,000 g/mol the molar ratio of the hydrophobic moiety to the hydrophilic moiety may range from 1:2 to 1:4, and the weight ratio of the hydrophobic moiety to the hydrophilic moiety may be lower than 0.4.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, the molecular weight of the polyanionic block copolymer may be between 8,000 and 50,000 g/mol, the molar ratio of the hydrophobic moiety to the hydrophilic moiety may range from 1:2 to 1:4, the weight ratio of the hydrophobic moiety to the hydrophilic moiety may be lower than 0.6, and the percentage of charged monomers of the polyanionic block copolymer may be at least 35% by weight of the weight of the polyanionic block copolymer. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, the molecular weight of the polyanionic block copolymer may be between 8,000 and 31,000 g/mol, the molar ratio of the hydrophobic moiety to the hydrophilic moiety may range from 1:2 to 1:4, the weight ratio of the hydrophobic moiety to the hydrophilic moiety may be lower than 0.5, and the percentage of charged monomers of the polyanionic block copolymer may be at least 45% by weight of the weight of the polyanionic block copolymer. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, the molecular weight of the polyanionic block copolymer may be between 10,000 and 25,000 g/mol the molar ratio of the hydrophobic moiety to the hydrophilic moiety may range from 1:2 to 1:4, the weight ratio of the hydrophobic moiety to the hydrophilic moiety may be lower than 0.4, and the percentage of charged monomers of the polyanionic block copolymer may be at least 55% by weight of the weight of the polyanionic block copolymer.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, the molecular weight of the polyanionic block copolymer may be between 8,000 and 50,000 g/mol, the molar ratio of the hydrophobic moiety to the hydrophilic moiety may range from 1:2 to 1:4, the weight ratio of the hydrophobic moiety to the hydrophilic moiety may be lower than 0.6, and at least 60% by weight of the hydrophilic moiety are charged monomers. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, the molecular weight of the polyanionic block copolymer may be between 8,000 and 31,000 g/mol, the molar ratio of the hydrophobic moiety to the hydrophilic moiety may range from 1:2 to 1:4, the weight ratio of the hydrophobic moiety to the hydrophilic moiety may be lower than 0.5, and at least 70% by weight of the hydrophilic moiety are charged monomers. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, the molecular weight of the polyanionic block copolymer may be between 10,000 and 25,000 g/mol the molar ratio of the hydrophobic moiety to the hydrophilic moiety may range from 1:2 to 1:4, the weight ratio of the hydrophobic moiety to the hydrophilic moiety may be lower than 0.4, and at least 80% by weight of the hydrophilic moiety are charged monomers.

The molecular weight of the hydrophobic moiety of the polyanionic block copolymer in the suspension concentrate agrochemical composition may be between 500 and 5,000 g/mol, the molecular weight of the hydrophilic moiety may be between 5,000 and 100,000 g/mol, the molecular weight of the polyanionic block copolymer may be between 8,000 and 50,000 g/mol, the molar ratio of the hydrophobic moiety to the hydrophilic moiety may range from 1:2 to 1:4, the weight ratio of the hydrophobic moiety to the hydrophilic moiety may be lower than 0.6, at least 60% by weight of the hydrophilic moiety are charged monomers, and the percentage of charged monomers of the polyanionic block copolymer may be at least 35% by weight of the weight of the polyanionic block copolymer. The molecular weight of the hydrophobic moiety of the polyanionic block copolymer in the suspension concentrate agrochemical composition may be between 1,000 and 4,000 g/mol the molecular weight of the hydrophilic moiety may be between 6,000 and 50,000 g/mol, the molecular weight of the polyanionic block copolymer may be between 8,000 and 31,000 g/mol, the molar ratio of the hydrophobic moiety to the hydrophilic moiety may range from 1:2 to 1:4, the weight ratio of the hydrophobic moiety to the hydrophilic moiety may be lower than 0.5, at least 70% by weight of the hydrophilic moiety are charged monomers, and the percentage of charged monomers of the polyanionic block copolymer may be at least 45% by weight of the weight of the polyanionic block copolymer. The molecular weight of the hydrophobic moiety of the polyanionic block copolymer in the suspension concentrate agrochemical composition may be between 1,500 and 3,000 g/mol, the molecular weight of the hydrophilic moiety may be between 7,000 and 30,000 g/mol, the molecular weight of the polyanionic block copolymer may be between 10,000 and 25,000 g/mol the molar ratio of the hydrophobic moiety to the hydrophilic moiety may range from 1:2 to 1:4, the weight ratio of the hydrophobic moiety to the hydrophilic moiety may be lower than 0.4, at least 80% by weight of the hydrophilic moiety are charged monomers, and the percentage of charged monomers of the polyanionic block copolymer may be at least 55% by weight of the weight of the polyanionic block copolymer.

The hydrophobic moiety of the polyanionic block copolymer in the suspension concentrate agrochemical composition may comprise C₁-C₂₄ alkyl acrylate monomers. The C₁-C₂₄ alkyl acrylate monomer may be selected from the group consisting of methylacrylate, ethylacrylate, n-propylacrylate, n-butylacrylate, 2-ethyl-hexyl acrylate, methylmethacrylate, ethylmethacrylate, n propylmethacrylate, n-butylmethacrylate and 2-ethyl-hexyl methacrylate, preferably the hydrophobic monomer is selected from the group consisting of methylacrylate, ethylacrylate, n propylacrylate, 2-ethyl-hexyl acrylate, methylmethacrylate, ethylmethacrylate, n-propylmethacrylate, n-butylmethacrylate, 2-ethyl-hexyl methacrylate or mixtures thereof.

The charged monomers of the hydrophilic moiety of the polyanionic block copolymer in the suspension concentrate agrochemical composition may be anionic monomers having a sulfonate group. The anionic monomer having a sulfonate group may be 2- acrylamido-2-methylpropane sulphonate (AMPS).

The non-charged monomers of the hydrophilic moiety of the polyanionic block copolymer in the suspension concentrate agrochemical composition are neutral hydrophilic monomers. Neutral hydrophilic monomers are less than 40 % by weight of the hydrophilic moiety of the polyanionic block copolymer. The neutral hydrophilic monomer may be selected from the group consisting of N-vinylpyrrolidone, ethylene oxide, glycoside acrylate, acrylamide, or mixtures thereof.

The concentration of the polyanionic block copolymer in the suspension concentrate agrochemical composition may be between 0.3% and 8%, between 0.5% and 6%, or between 1% and 4% by total weight of the composition.

The concentration of the polyanionic block copolymer in the suspension concentrate agrochemical composition may be between 0.3% and 8% by total weight of the composition, the molar ratio of the hydrophobic moiety to the hydrophilic moiety may range from 1:2 to 1:4, and the weight ratio of the hydrophobic moiety to the hydrophilic moiety may be lower than 0.6. The concentration of the polyanionic block copolymer in the suspension concentrate agrochemical composition may be between 0.5% and 6% by total weight of the composition, the molar ratio of the hydrophobic moiety to the hydrophilic moiety may range from 1:2 to 1:4, and the weight ratio of the hydrophobic moiety to the hydrophilic moiety may be lower than 0.5. The concentration of the polyanionic block copolymer in the suspension concentrate agrochemical composition may be between 1% and 4% by total weight of the composition, the molar ratio of the hydrophobic moiety to the hydrophilic moiety may range from 1:2 to 1:4, and the weight ratio of the hydrophobic moiety to the hydrophilic moiety may be lower than 0.4.

The concentration of the polyanionic block copolymer in the suspension concentrate agrochemical composition may be between 0.3% and 8% by total weight of the composition, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.6. The concentration of the polyanionic block copolymer in the suspension concentrate agrochemical composition may be between 0.5% and 6% by total weight of the composition, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.5. The concentration of the polyanionic block copolymer in the suspension concentrate agrochemical composition may be between 1% and 4% by total weight of the composition, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, and the weight ratio of the hydrophobic moiety to the hydrophilic moiety may be lower than 0.4.

The concentration of the polyanionic block copolymer in the suspension concentrate agrochemical composition may be between 0.3% and 8% by total weight of the composition, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6, and the percentage of charged monomers of the polyanionic block copolymer may be at least 35% by weight of the weight of the polyanionic block copolymer. The concentration of the polyanionic block copolymer in the suspension concentrate agrochemical composition may be between 0.5% and 6% by total weight of the composition, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5, and the percentage of charged monomers of the polyanionic block copolymer may be at least 45% by weight of the weight of the polyanionic block copolymer. The concentration of the polyanionic block copolymer in the suspension concentrate agrochemical composition may be between 1% and 4% by total weight of the composition, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4, and the percentage of charged monomers of the polyanionic block copolymer may be at least 55% by weight of the weight of the polyanionic block copolymer.

The concentration of the polyanionic block copolymer in the suspension concentrate agrochemical composition may be between 0.3% and 8% by total weight of the composition, the molecular weight of the polyanionic block copolymer may be between 8,000 and 50,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6, and the percentage of charged monomers of the polyanionic block copolymer may be at least 35% by weight of the weight of the polyanionic block copolymer. The concentration of the polyanionic block copolymer in the suspension concentrate agrochemical composition may be between 0.5% and 6% by total weight of the composition, the molecular weight of the polyanionic block copolymer may be between 8,000 and 31,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5, and the percentage of charged monomers of the polyanionic block copolymer may be at least 45% by weight of the weight of the polyanionic block copolymer. The concentration of the polyanionic block copolymer in the suspension concentrate agrochemical composition may be between 1% and 4% by total weight of the composition, the molecular weight of the polyanionic block copolymer may be between 10,000 and 25,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4, and the percentage of charged monomers of the polyanionic block copolymer may be at least 55% by weight of the weight of the polyanionic block copolymer.

The concentration of the polyanionic block copolymer in the suspension concentrate agrochemical composition may be between 0.3% and 8% by total weight of the composition, the molecular weight of the polyanionic block copolymer may be between 8,000 and 50,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6, the molecular weight of the hydrophilic moiety may be between 5,000 and 100,000 g/mol, and the percentage of charged monomers of the polyanionic block copolymer may be at least 35% by weight of the weight of the polyanionic block copolymer. The concentration of the polyanionic block copolymer in the suspension concentrate agrochemical composition may be between 0.5% and 6% by total weight of the composition, the molecular weight of the polyanionic block copolymer may be between 8,000 and 31,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5, the molecular weight of the hydrophilic moiety may be between 6,000 and 50,000 g/mol, and the percentage of charged monomers of the polyanionic block copolymer may be at least 45% by weight of the weight of the polyanionic block copolymer. The concentration of the polyanionic block copolymer in the suspension concentrate agrochemical composition may be between 1% and 4% by total weight of the composition, the molecular weight of the polyanionic block copolymer may be between 10,000 and 25,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4, the molecular weight of the hydrophilic moiety may be between 7,000 and 30,000 g/mol, and the percentage of charged monomers of the polyanionic block copolymer may be at least 55% by weight of the weight of the polyanionic block copolymer.

The concentration of the polyanionic block copolymer in the suspension concentrate agrochemical composition may be between 0.3% and 8% by total weight of the composition, the molecular weight of the polyanionic block copolymer may be between 8,000 and 50,000 g/mol, the hydrophilic moiety of the polyanionic block copolymer may comprise at least 60% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.6, the molecular weight of the hydrophilic moiety may be between 5,000 and 100,000 g/mol, the molecular weight of the hydrophobic moiety may be between 500 and 5,000 g/mol, and the percentage of charged monomers of the polyanionic block copolymer may be at least 35% by weight of the weight of the polyanionic block copolymer. The concentration of the polyanionic block copolymer in the suspension concentrate agrochemical composition may be between 0.5% and 6% by total weight of the composition, the molecular weight of the polyanionic block copolymer may be between 8,000 and 31,000 g/mol, the hydrophilic moiety of the polyanionic block copolymer may comprise at least 70% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.5, the molecular weight of the hydrophilic moiety may be between 6,000 and 50,000 g/mol, the molecular weight of the hydrophobic moiety may be between 1,000 and 4,000 g/mol, and the percentage of charged monomers of the polyanionic block copolymer may be at least 45% by weight of the weight of the polyanionic block copolymer. The concentration of the polyanionic block copolymer in the suspension concentrate agrochemical composition may be between 1% and 4% by total weight of the composition, the molecular weight of the polyanionic block copolymer may be between 10,000 and 25,000 g/mol, the hydrophilic moiety of the polyanionic block copolymer may comprise at least 80% by weight of charged monomers with respect to the hydrophilic moiety, the molar ratio of the hydrophobic moiety to the hydrophilic moiety may range from 1:2 to 1:4, the weight ratio of the hydrophobic moiety to the hydrophilic moiety may be lower than 0.4, the molecular weight of the hydrophilic moiety may be between 7,000 and 30,000 g/mol, the molecular weight of the hydrophobic moiety may be between 1,500 and 3,000 g/mol, and the percentage of charged monomers of the polyanionic block copolymer may be at least 55% by weight of the weight of the polyanionic block copolymer.

The suspension concentrate agrochemical composition may optionally comprise one or more dispersants. The optional one or more dispersant is selected from the group consisting of grafted copolymers comprising a poly(methyl methacrylate/methacrylic acid) backbone and polyethylene oxide side chains, ethoxylated tristyrylphenol, ethoxylated tristyrylphenol phosphate esters, poly(oxyethylene)-poly(oxypropylene)-poly(oxyethylene) polymers, (ethyleneoxide-propyleneoxide) butyl-ether di-block polymers, oligomeric D-glucopyranose, sodium lignosulfonate or alkylnaphthalene sulfonate compounds.

The suspension concentrate agrochemical composition may optionally further contain one or more agriculturally acceptable inert additives. The agriculturally acceptable inert additive may be selected from the group consisting of chelating agents, thickeners, anti-foam agents, pH buffers, antifreeze agents, surfactants, emulsifiers, wetting agents or humectants, suspending agents, stabilizers, plant penetrants (or translocators), anti-oxidation agents, preservative agents, drift retardants, inverting agents, soil penetrants, UV absorbers, binders, stickers, fertilizers, pigments, colorants, solvents or mixtures thereof.

The specific type of thickener is not particularly relevant and those known in the art can be used. Thickeners are typically water-soluble polymers which exhibit suitable plastic properties in an aqueous medium. Suitable thickeners can be compounds which affect the flow behavior of the suspension and may assist in its stabilization against caking. Mention may be made, for example, of commercial thickeners based on polysaccharides, such as methylcellulose, carboxymethylcellulose, hydroxypropyl- cellulose, Xanthan Gum, synthetic polymers such as acrylic acid polymers, polyvinyl alcohol or polyvinyl pyrrolidones, silicic acid or phyllosilicates such as montmorillonites, attapulgites and bentonites, which may be hydrophobized. The concentration of thickeners in the suspension concentrate agrochemical composition may be lower or equal to 2% by weight, or it may be from 0.01 to 2% by weight, from 0.02 to 1.5% by weight, or from 0.1 to 1% by weight, based on the total weight of the composition.

### Process for the preparation of the suspension concentrate agrochemical compositions disclosed in this document

The present document also refers to a process for the preparation of a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water; wherein the process comprises mixing at least one water soluble salt of an imidazolinone herbicide with water, the polyanionic block copolymer, and at least one synthetic auxin herbicide selected from the group consisting of pyridine carboxylic acids or quinolinecarboxylic acids.

The hereinabove disclosed process may comprise:
(i) mixing at least one water soluble salt of an imidazolinone herbicide with water and optionally, an antifreeze agent to obtain a solution;
(ii) mixing the previously obtained solution with the polyanionic block copolymer, wherein the block copolymer comprises at least one hydrophobic moiety and at least one hydrophilic moiety, wherein at least 60% by weight of the hydrophilic moiety are charged monomers;
(iii) mixing the solution obtained in the previous step with at least one synthetic auxin herbicide selected from the group consisting of pyridine carboxylic acids or quinolinecarboxylic acids to obtain a suspension concentrate;
(iv) optionally, adding one or more dispersants and/or an additives;
(v) optionally, adjusting the weight of the suspension concentrate with water.

The at least one synthetic auxin herbicide selected from the group consisting of pyridine carboxylic acids or quinolinecarboxylic acids in the process may be milled before being mixed with the solution obtained in step (ii).

### Tank mix

The present disclosure also relates to a tank mix comprising an adjuvant and a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water.

The suspension concentrate agrochemical composition of the invention may be mixed with tank adjuvants, to yield a tank mix, prior to their application in the field to improve physical properties and efficacy. The tank adjuvants can be the same type of additives as the agriculturally acceptable inert additives added into the suspension concentrate agrochemical composition, i.e. they may be selected from the group consisting of chelating agents, thickeners, anti-foam agents, pH buffers, antifreeze agents, surfactants, emulsifiers, wetting agents or humectants, suspending agents, stabilizers, plant penetrants (or translocators), anti-oxidation agents, preservative agents, drift retardants, inverting agents, soil penetrants, UV absorbers, binders, stickers, fertilizers, pigments, colorants, solvents or mixtures thereof. In one embodiment, the tank mix may comprise at least fertilizers.

### Methods and Applications

The present document also discloses a method for the control of weeds, pests and/or diseases comprising contacting an effective amount of a suspension concentrate agrochemical composition which comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water; or a tank mix comprising an adjuvant and the herein mentioned suspension concentrate agrochemical composition with at least one of a locus where the weed, pest and/or disease is to be controlled, a plant, an area adjacent to a plant, soil adapted to support growth of a plant, a root of a plant, foliage of a plant, and/or a seed adapted to produce a plant.

The methods disclosed in the present document refer to any weed, pest or disease, for which the imidazolinone herbicide and/or the synthetic auxin herbicide selected from the group consisting of pyridine carboxylic acids or quinolinecarboxylic acids have known activity. In the same way the methods disclosed in the present document refer to any crop for which the imidazolinone herbicide and/or the synthetic auxin herbicide selected from the group consisting of pyridine carboxylic acids or quinolinecarboxylic acids have known protecting activity. The methods disclosed in the present document refer to any crop plants, including but not limited to monocotyledons such as sugar cane, cereals, rice, maize (corn); or dicotyledon crop such as beets (such as sugar beet or fodder beet); fruits (such as pomes, stone fruits, or soft fruits, for example apples, pears, plums, peaches, almonds, cherries, strawberries, raspberries, or blackberries); leguminous plants (such as beans, lentils, peas, or soybeans); oil plants (such as rape, mustard, poppy, olives, sunflowers, coconut, castor oil plants, cocoa beans, or groundnuts); cucumber plants (such as marrows, cucumbers or melons); fiber plants (such as cotton, flax, hemp, or jute); citrus fruits (such as oranges, lemons, grapefruit, or mandarins); vegetables (such as spinach, lettuce, cabbages, carrots, tomatoes, potatoes, cucurbits, or paprika); lauraceae (such as avocados, cinnamon, or camphor); tobacco; nuts; coffee; tea; vines; hops; durian; bananas; natural rubber plants; and ornamentals (such as flowers, shrubs, broad-leaved trees, or evergreens, for example conifers). The method disclosed in the present document may refer to rice crop.

The suspension concentrate agrochemical compositions disclosed in the present document, whether neat or as tank mixes, are applied to the field in different amounts depending on the specific active ingredients used, the target crop and the weed, pest and/or disease to be controlled. In some embodiments, the active ingredients are each applied in an amount from 1 g/ha to 1000 g/ha, or from 100 g/ha to 700 g/ha.

The suspension concentrate agrochemical compositions disclosed in the present document can be applied before planting, at the time of planting or after planting.

The following examples are included for illustrative purposes only and should not be construed as limitations on the invention claimed herein.

### Experiments

### Example 1: preparation of a polyanionic block copolymer used in the present suspension concentrate compositions

A sample of a polyanionic block copolymer as used in the present document is prepared following Example 1 of WO 2017/098325 A1 (pages 46 to 48): PolyAgro A.

PolyAgro A is a polyanionic di-block copolymer, with a total weight of 17000 g/mol, composed of a hydrophobic moiety and a hydrophilic moiety. The hydrophilic moiety is made of sodium 2-Acryloylamino-2- methylpropane-I-sulfonate (AMPS) monomers, which represent 77 w/w% of the total weight of the copolymer. The other 23 w/w% of the copolymer corresponds to the hydrophobic moiety which is made of ethyl acrylate monomers. The total amount of monomers in the copolymer (degree of polymerization, DPn) is 85 monomers, and wherein at least 60% by weight of the hydrophilic moiety are charged monomers.

PolyAgro A is obtained following procedure described below: Into a 2L double jacketed reactor equipped with mechanical agitator and reflux condenser is added 11.26 g of O-etyl-S-(1-methoxycarbonylethyl)xanthate (CH3CH(C02CH3))S(C=S)OEt), 264.08g of Ethanol, and 356.32g of De-ionized water and 1400g of AMPS(Na) solution (50 percent active) and 1.52g of 4,4'-Azobis(4-cyanopentanoic acid). The reactor contents are heated to 70 degrees centigrade under agitation and nitrogen. The reaction mixture is aged at 70 degrees centigrade for a further hour whereupon it is cooled to ambient temperature and discharged. The measured solids content is 37.6 percent (115 degrees centigrade, 60 mins). GPC Mals: Mn=16300 Mw=2600 IP=1.6.

Into a 5L double jacketed reactor equipped with mechanical agitator and reflux condenser is added 2127g of the above solution and 330g of de-ionized water. The reactor contents are heated to 70 degrees centigrade under agitation and a nitrogen stream. Once 70 degrees centigrade is reached, 106.67g of ethyl acrylate (EA) are added over 2h and 37.37g of a 10 w/w% solution of 4,4'-Azobis(4-cyanopentanoic acid) is concomitantly added over 2.5h. After the addition of the initiator solution is finished, the reaction solution is further aged for one hour. Thereafter a shot of 44.85g of 10 w/w% solution of 4,4'-Azobis(4-cyanopentanoic acid) is added and the mixture aged at 70 degrees centigrade for a further hour whereupon it is cooled to ambient temperature and discharged. The measured solids content is 40.0 percent (115 degrees centigrade, 60 mins). Ethanol is removed from the polymer solution using a rotary evaporator. Water is added to achieve a polymer solution with a final solids content of 40.4 percent.

2600g of polymer solution is placed in-a 5L double jacketed reactor equipped with mechanical agitator and reflux condenser. The pH of the solution is increased to 8.5 using a 50 percent solution of NaOH. The mixture is heated to 70 degrees centigrade with stirring whereupon 48.4g of a 30 w/w% solution of hydrogen peroxide is added over 1 hour. Once additions are finished, the solution is aged for a further 3h whereupon it is cooled and discharged.

The residuals monomers are measured by HPLC and GC (AMPS = 22ppm, EA = 2ppm). The measured solids content is 37.5 percent. The polymer is used in the formulations according to the below examples from a ready aqua polymer solution at concentration of about 30 percent w/w.

### Example 2: Stability of suspension concentrate formulations comprising different dispersants

A solution of imazamox ammonium in water is prepared by mixing imazamox and ammonia in a 1:1 molar ratio in water. Propylene glycol and water are added to the solution of the previous step. One dispersant is added to the solution of the previous step. Quinclorac, previously milled in a tube mill, is added to the dispersant solution of the previous step to yield a suspension concentrate composition containing imazamox ammonium and quinclorac with the averages of the Table 1.

**Table 1**

| **Ingredient** | **Average (% by weight)** |
|---|---|
| Imazamox ammonium | 14 |
| Quinclorac | 5 |
| Dispersant | 3.0 |
| Propylene glycol | 5.0 |
| Water | 63 |

The stability of the compositions, i.e. no phase separation leading to a clear or translucent liquid phase at the top of the composition after storage for 24 hours at room temperature, is checked for the compositions comprising different dispersants. Results for each composition with a different dispersant are shown in Table 2 and Figure 1.

**Table 2**

| **Dispersant** | **Chemical structure** | **Phase separation** |
|---|---|---|
| Pluronic PE 3100 | Poly(oxyethylene)/poly(oxypropylene)-poly(oxyethylene) polymer | Yes |
| Soprophor TS-54 | Ethoxylated tristyrylphenol | Yes |
| Dispersogen ACP 120 | Anionic comb-shaped polymer | Yes |
| Imbentin T-65 | Polyoxyethylenated 10 isotridecanol | Yes |
| Atlox 4913 | Grafted copolymer comprising a poly(methyl methacrylate/methacrylic acid) backbone and polyethylene oxide side chains | Yes |
| Atlox 4915 | Polymeric amphoteric dispersant | Yes |
| Atlas G5000 | (ethyl eneoxide-propyl eneoxid e) butyl-ether di-block polymer | Yes |
| Pluronic PE 10500 | Poly(oxyethylene)/poly(oxypropylene)-poly(oxyethylene) polymer | Yes |
| PolyAgro A | Compound of Example 1 | No |

Table 2 discloses that when the dispersant is PolyAgro A the suspension concentrate composition is stable and it does not show any phase separation leading to a clear or translucent liquid phase at the top of the composition after storage for 24 hours at room temperature.

### Example 3: Suspension concentrate formulations comprising 2 dispersants

The suspension concentrate formulations of table 3 are prepared and their viscosities are measured with a Brookfield DV2T viscosimeter using spindle 63 at 12 rpm at room temperature (RT) just after their preparation (starting point) and after storage for 8 weeks at 40 ºC.

**Table 3**

| Ingredient | Average (% by weight) | Average (% by weight) | Average (% by weight) |
|---|---|---|---|
| Quinclorac at 95% by weight in water | 35.5 | 35.5 | 35.5 |
| Imazamox ammonium solution at 13.7% by weight in water | 23.9 | 23.9 | 23.9 |
| Soprophor TS-54 | | | 2.3 |
| PolyAgro A | 2.7 | 2.7 | 2.7 |
| Pluronic PE 10500 | 2.3 | | |
| Atlas G5000 | | 2.3 | |
| Propylene glycol (1,2-propanediol) | 5.4 | 5.4 | 5.4 |
| Silicaid AF-100 (Dimethyl siloxane) | 0.1 | 0.1 | 0.1 |
| Kelzan AP-AS (Xanthan Gum) | 6.4 | 6.4 | 6.4 |
| Water | 23.7 | 23.7 | 23.7 |

| | **Viscosity (cps)** | **Viscosity (cps)** | **Viscosity (cps)** |
|---|---|---|---|
| Starting point at RT | 1100 | 3100 | 2500 |
| 8 weeks at 40 ºC | 2600 | | |

## Claims

1. A suspension concentrate agrochemical composition that comprises: (a) at least one water soluble salt of an imidazolinone herbicide, (b) at least one synthetic auxin herbicide selected from the group consisting of pyridine carboxylic acids or quinolinecarboxylic acids, (c) a polyanionic block copolymer, wherein the block copolymer comprises at least one hydrophobic moiety and at least one hydrophilic moiety, wherein at least 60% by weight of the hydrophilic moiety are charged monomers; (d) optionally, one or more dispersants, and (e) water.

2. The suspension concentrate agrochemical composition according to claim 1, wherein the cation of the at least one water soluble salt of an imidazolinone herbicide is selected from the group consisting of ammonium, C₁-C₂₄ alkylammonium, alkaline or alkaline earth metals.

3. The suspension concentrate agrochemical composition according to any of previous claims, wherein the imidazolinone herbicide is selected from the group consisting of imazapyr, imazapic, imazethapyr, imazamox or imazaquin.

4. The suspension concentrate agrochemical composition according to any of previous claims, wherein the pyridine carboxylic acid or quinolinecarboxylic acid synthetic auxin herbicide is selected from the group consisting of clopyralid, aminopyralid, fluroxypyr, triclopyr, picloram, quinclorac or quinmerac.

5. The suspension concentrate agrochemical composition according to any of previous claims, wherein the ratio by weight of the at least one water soluble salt of an imidazolinone herbicide to the at least one synthetic auxin herbicide selected from the group consisting of pyridine carboxylic acids or quinolinecarboxylic acids ranges from 1:3 to 1:30.

6. The suspension concentrate agrochemical composition according to any of previous claims, wherein the molar ratio of the hydrophobic moiety to the hydrophilic moiety ranges from 1:2 to 1:4, and the weight ratio of the hydrophobic moiety to the hydrophilic moiety is lower than 0.6.

7. The suspension concentrate agrochemical composition according to any of previous claims, wherein the weight percentage of the charged monomers is at least 35% by weight of the weight of the polyanionic block copolymer.

8. The suspension concentrate agrochemical composition according to any of previous claims, wherein the molecular weight of the polyanionic block copolymer is between 8,000 and 50,000 g/mol.

9. The suspension concentrate agrochemical composition according to any of previous claims, wherein the molecular weight of the hydrophilic moiety is between 5,000 and 100,000 g/mol.

10. The suspension concentrate agrochemical composition according to any of previous claims, wherein the molecular weight of the hydrophobic moiety is between 500 and 5,000 g/mol.

11. The suspension concentrate agrochemical composition according to any of previous claims, wherein the hydrophobic moiety comprises C₁-C₂₄ alkyl acrylate monomers.

12. The suspension concentrate agrochemical composition according to any of previous claims, wherein the charged monomers are anionic monomers having a sulfonate group.

13. The suspension concentrate agrochemical composition according to any of previous claims, wherein less than 40 % by weight of the hydrophilic moiety are neutral hydrophilic monomers.

14. A tank mix comprising an adjuvant and the suspension concentrate agrochemical composition according to any of previous claims.

15. A method for the control of weeds, pests and/or diseases comprising contacting an effective amount of the suspension concentrate agrochemical composition according to any of claims 1 to 13 or the tank mix according to claim 14 with at least one of a locus where the weed, pest and/or disease is to be controlled, a plant, an area adjacent to a plant, soil adapted to support growth of a plant, a root of a plant, foliage of a plant, and/or a seed adapted to produce a plant.
